## Europäisches Patentamt
## European Patent Office
## Office européen des brevets

(11) Numéro de publication: **0 113 298**
**B1**

(12) **FASCICULE DE BREVET EUROPEEN**

(45) Date de publication du fascicule du brevet:
**28.10.87**

(51) Int. Cl.⁴: **H 01 G 9/02**

(21) Numéro de dépôt: **83402565.2**

(22) Date de dépôt: **30.12.83**

(54) **Nouveau séparateur composite pour condensateurs électrolytiques et condensateur électrolytique comportant un tel séparateur.**

(30) Priorité: **30.12.82 FR 8222115**

(43) Date de publication de la demande:
**11.07.84 Bulletin 84/28**

(45) Mention de la délivrance du brevet:
**28.10.87 Bulletin 87/44**

(84) Etats contractants désignés:
**DE GB IT NL SE**

(56) Documents cités:
**EP - A - 0 022 719**
**GB - A - 859 884**
**US - A - 2 740 732**
**US - A - 3 908 157**

(73) Titulaire: **LES CONDENSATEURS SIC SAFCO, 107, rue de Bellevue, F-92704 Colombes cedex (FR)**

(72) Inventeur: **Constanti, Jean, 5, rue de Strasbourg, F-78300 Poissy (FR)**
Inventeur: **Grandadam, Pierre, 55, rue Boileau, F-75016 Paris (FR)**

(74) Mandataire: **Lecca, Jean et al, CABINET PLASSERAUD 84, rue d'Amsterdam, F-75009 Paris (FR)**

## Description

On a décrit au «brevet principal» (brevet européen no 22719 – délivré sur la demande européenne no 80.401042.9 publiée le 21 janvier 1981 un séparateur imprégné d'électrolyte à disposer entre les deux électrodes, à savoir l'anode et la cathode, d'un condensateur électrolytique, notamment du type formé par des rubans bobinés constituant l'anode, la cathode et le séparateur imprégné d'électrolyte.

Le séparateur selon le brevet principal convenait particulièrement aux condensateurs électrolytiques utilisés en électrotechnique à des tensions de service supérieures à 250 volts dans diverses applications industrielles soit en régime impulsionnel de charge et décharge, comme par exemple dans les soudeuses et les dispositifs d'aimantation, soit en filtrage des courants alternatifs redressés ou des courants non sinusoïdaux, comme par exemple dans les alimentations à courant haché, et principalement dans les cas où la puissance mise en jeu nécessite le montage de ces condensateurs en séries parallèles sous forme de batteries.

Au brevet principal on avait défini un coefficient de qualité

$$\frac{V^2}{Zv},$$

, V désignant la tension de service du condensateur, v le volume spécifique du condensateur exprimé en $cm^3/\mu F$ et Z l'impédance du condensateur formée par l'impédance en série de ses divers éléments constitutifs: bornes, connexions, soudures, rubans d'anode ou de cathode et rubans de séparateur imprégné d'électrolyte.

Le but de l'invention objet du brevet principal était d'augmenter ce coefficient de qualité notamment en réduisant l'impédance du séparateur imprégné d'électrolyte (qui constitue l'essentiel de l'impédance totale Z du condensateur figurant dans le coefficient de qualité) pour une tension de service donnée.

L'invention du brevet principal avait également pour objet d'améliorer, grâce au nouveau séparateur proposé, la teneur du condensateur aux hautes tensions et à abaisser considérablement la résistance série.

Finalement le brevet principal avait pour objet un séparateur pour condensateur électrolytique, caractérisé par le fait qu'il est constitué par l'association d'au moins une feuille de polypropylène poreux et d'au moins une feuille de papier absorbant imprégnée par un électolyte.

Avantageusement, dans un tel séparateur, le polypropylène avait une porosité cellulaire ouverte d'au moins 30% et possédait un réseau de capillaires de section inférieure à $0,2.10^{-8}$ cm², avec de préférence une densité apparente non supérieure à 0,55.

Il y a enfin lieu de noter que le séparateur selon le brevet principal était destiné à être disposé dans un condensateur de préférence avec la feuille de polypropylène contre l'anode, la feuille du séparateur disposé contre la cathode étant avantageusement une feuille de papier absorbant imprégnée par l'électrolyte.

Or, la Demanderesse vient maintenant de constater qu'il était possible de remplacer la feuille de polypropylène poreux par une feuille de polyester et plus particulièrement encore par une feuille de polybutylène téréphtalate, sans modifier sensiblement les propriétés électriques du séparateur constitué par au moins une telle feuille et au moins une feuille de papier absorbant imprégnée par un électrolyte.

La présente invention a par conséquent pour objet un séparateur pour condensateur électrolytique qui est constitué par l'association d'au moins une feuille de matière plastique poreuse et d'au moins une feuille de papier absorbant imprégnée par un électrolyte caractérisé par le fait que la matière plastique est un polyester.

Avantageusement, ce polyester est du polybutylène téréphtalate.

Comme dans le cadre du brevet principal on dispose, dans le condensateur électrolytique, la feuille de matière plastique poreuse, à savoir la feuille de polyester poreux, contre l'anode.

Il n'était pas du tout évident que l'on pouvait remplacer le polypropylène poreux par du polyester poreux pour réaliser un séparateur destiné à un condensateur électrolytique utilisé à des tensions de service élevées. En effet, aux tensions supérieures à 250 volts et surtout à 500 volts apparaissent, au cours du fonctionnement, des scintillations bien connues de l'homme de l'art et qui sont dues aux régénérations de la couche anodique. De telles scintillations à l'interface couche anodique/séparateur risquent de produire des destructions du séparateur. La Demanderesse n'avait pas constaté de destructions avec le polypropylène, dans le cadre du brevet principal, et elle avait pensé que la résistance de l'anode du condensateur aux scintillations était due au fait que le polypropylène étant un hydrocarbure n'était pas capable de former des produits de dégradation corrosifs vis-à-vis de l'anode. Or, cette particularité d'absence de produits corrosifs lors de la dégradation, sous l'effet des scintillations, ne se retrouvait pas dans les polyesters, tels que le polybutylène téréphtalate. En effet, les polyesters résultent de la polycondensation d'un acide sur un polyalcool et les produits de dégradation des polyesters contiennent l'acide de base qui est susceptible d'aggraver le phénomène de scintillations et de détruire le condensateur.

On voit donc qu'il n'était pas du tout évident de remplacer le polypropylène poreux du brevet principal par un polyester poreux, notamment par le polybutylène téréphtalate, dans le séparateur du brevet principal sans risquer une détérioration rapide d'un condensateur comportant un tel séparateur.

La Demanderesse a fait essais comparatifs d'un séparateur réalisé selon le brevet principal (avec une feuille de polypropylène poreux) et d'un séparateur réalisé selon la présente invention, c'est-à-dire comportant, à la place de la feuille de polypropylène, une feuille de polyester poreux, en fait de polybutylène téréphtalate. Dans les essais comparatifs, la feuille poreuse de polypropylène (selon le brevet principal) ou de polyester poreux, à savoir de polybutylène téréphtalate, selon la présente invention était disposée contre la couche anodique du condensateur.

Deux séries de condensateurs ont été fabriqueés, chacune avec une anode de 320 × 9 cm, en aluminium, de titre 99,99, d'épaisseur 90 μm, gravé et formé anodiquement à 600 volts, et avec une cathode de 30 μm d'épaisseur en aluminium gravé, séparées par les séparateurs indiqués dans les tableaux I et II.

Les condensateurs du tableau I comportent du polypropylène poreux contre l'anode, tandis que ceux du tableau II comportent du polyester poreux, à savoir du polybutylène téréphtalate poreux, contre l'anode.

Les bobinages obtenus ont été imprégnés par un électolyte formulé selon les indications du brevet américain no. 3 638 077, exemple 1, de manière à obtenir une résistivité de 1 365 Ω. cm à 20°C, comme dans les exemples figurant dans le brevet principal.

Les deux séries de condensateurs, après relevé des caractéristiques initiales, ont été introduites dans une enceinte chauffée à une température uniforme de 85°C et maintenues pendant 2 112 h sous une tension de 500 volts, puis retirées et on a relevé de nouveau les caractéristiques après retour à la température de 20°C.

Les résultats obtenus figurent dans les tableaux I et II.

## Tableau I

Composition du séparateur:
- une feuille de polypropylène poreux d'épaisseur 60 μm sur l'anode
- une feuille de papier de densité 0,36 et d'épaisseur 75 μm sur la cathode soit au total un séparateur d'épaisseur 135 μm

| Condensateur n° | Caractéristiques initiales | | | | | Caractéristiques après 2 112 h à 85°C, sous 500 Vcc | | | | |
|---|---|---|---|---|---|---|---|---|---|---|
| | C (μF) | tg δ % | If (μA) | Z 10 KHz | Z 100 KHz | C (μF) | tg δ % | If (μA) | Z 10 KHz (m Ω) | Z 100 KHz |
| 1 | 711 | 2,7 | 290 | 36 | 24,5 | 641 | 3,8 | 240 | 64 | 50 |
| 2 | 719 | 2,6 | 270 | 35 | 24 | 651 | 3,5 | 440 | 62 | 50 |
| 3 | 709 | 2,9 | 240 | 37 | 25 | 642 | 3,7 | 330 | 65 | 52 |
| Moyenne | 713 | 2,7 | 267 | 36 | 24,5 | 645 | 3,7 | 337 | 64 | 50,6 |

## Tableau II

Composition du séparateur:
- une feuille de polyester poreux d'épaisseur 75 μm sur l'anode
- une feuille de papier de densité 0,36 et d'épaisseur 50 μm sur la cathode soit au total un séparateur de 125 μm d'épaisseur

| Condensateur n° | Caractéristiques initiales | | | | | Caractéristiques après 2 112 h à 85°C, sous 500 Vcc | | | | |
|---|---|---|---|---|---|---|---|---|---|---|
| | C (μF) | tg δ % | If (μA) | Z 10 KHz | Z 100 KHz | C (μF) | tg δ % | If (μA) | Z 10 KHz (m Ω) | Z 100 KHz |
| 1 | 735 | 3,2 | 180 | 39 | 28 | 655 | 3,9 | 180 | 69 | 57 |
| 2 | 738 | 3,3 | 180 | 41 | 30 | 657 | 4,0 | 250 | 71 | 60 |
| 3 | 720 | 3,1 | 170 | 38 | 27 | 644 | 3,7 | 180 | 66 | 54 |
| Moyenne | 731 | 3,2 | 177 | 39 | 28 | 652 | 3,9 | 203 | 69 | 57 |

Les caractéristiques initiales des deux modèles de condensateurs sont très voisines et après l'essai de 2 112 h à 85°C sous 500 Vcc, la comparaison des variations est résumée dans le tableau III ci-après:

| | $\frac{\Delta C}{C}$ % | $\frac{\Delta tg \delta}{tg \delta}$ % | $\frac{\Delta If}{If}$ % | $\frac{\Delta Z}{Z}$ 10 KHz % | $\frac{\Delta Z}{Z}$ 100 KHz % |
|---|---|---|---|---|---|
| Série I – polypropylène | -9,5 | +37 | +26,2 | +78 | +106 |
| Série II – polyester | -10,8 | +21,9 | +14,7 | +76,9 | +103 |

On notera que, dans ces tableaux I et II, C et tgδ ont été mesurés à 100 Hz et que If désigne le courant de fuite après 5 mn sous tension de 480 Vcc, en μA (comme au brevet principal). Quant aux impédances 7 à 10 KHz et à 100 KHz, elles sont indiquées en mΩ (également comme au brevet principal).

Les variations des caracteristiques obtenues avec les deux types de séparateurs sont comparables et la nature de la feuille de plastique poreuse n'a pas d'influence marquée.

Bien que l'on n'ait effectué des essais qu'avec le polybutylène téréphtalate, il est bien entendu que l'invention n'est pas limitée à ce polyester et que l'on peut utiliser par exemple les polyesters suivants: polyéthylène téréphtalate, copolymère de polyéthylène téréphtalate et de polyéthylène isophtalate, polyhydrocarbonate.

En tout cas, le polyester, plus particulièrement le polybutylène téréphtalate, doit être mise en œuvre sous forme de feuilles poreuses.

### Revendications

1. Séparateur pour condensateur électrolytique qui est constitué par l'association d'au moins une feuille de matière plastique poreuse et d'au moins une feuille de papier absorbant imprégnée par un électrolyte, caractérisé par le fait que la matière plastique est un polyester.

2. Séparateur selon la revendication 1, caractérisé par le fait que le polyester poreux est du polybutylène téréphtalate poreux.

3. Condensateur électrolytique, caractérisé par le fait qu'il comporte, entre une anode et une cathode, un séparateur selon la revendication 1 ou 2.

4. Condensateur électrolytique selon la revendication 3, caractérisé par le fait que la feuille du séparateur disposée contre l'anode est la feuille de polyester poreux

### Patentansprüche

1. Abstandhalter für Elektrolyt-Kondensatoren, bestehend aus mindestens einem Blatt eines porösen Kunststoffes und mindestens einem Blatt eines mit einem Elektrolyten imprägnierten absorbierenden Papiers, dadurch gekennzeichnet, dass der Kunststoff ein Polyester ist.

2. Abstandhalter nach Anspruch 1, dadurch gekennzeichnet, dass der poröse Polyester aus einem Polybutylen-Terephthalat besteht.

3. Elektrolyt-Kondensator, dadurch gekennzeichnet, dass zwischen einer Anode und einer Kathode ein Abstandhalter gemäss Anspruch 1 oder 2 angeordnet ist.

4. Elektrolyt-Kondensator nach Anspruch 3, dadurch gekennzeichnet, dass das neben der Anode angeordnete Blatt des Abstandhalters aus porösem Polyester besteht.

### Claims

1. A separator for an electrolytic capacitor, which is formed by the association of at least one film of porous plastic matter and of at least one sheet of absorbant paper impregnated with an electrolyte, wherein the plastic matter is a polyester.

2. A separator according to claim 1, wherein the porous polyester is porous polybutylene terephtalate.

3. An electrolytic capacitor, wherein a separator according to claim 1 or 2 is located between an anode and a cathode.

4. An electrolytic capacitor according to claim 3, wherein the film of the separator disposed against the anode is the film of porous polyester.